# EUROPEAN PATENT APPLICATION

(11) **EP 4 390 647 A1**
(43) Date of publication of application: **26.06.2024**
(21) Application number: 22869413.9
(22) Date of filing: 16.09.2022
(51) Int. Cl.: G06F 3/06

(54) **CLOUD TECHNOLOGY-BASED FILE SERVICE PROVIDING METHOD AND RELATED DEVICE**

(30) Priority: 17.09.2021 CN 202111095547
(71) Applicant: Huawei Cloud Computing Technologies Co., Ltd., Guizhou 550025 (CN)
(72) Inventor: LI, Hongbo, Guizhou 550025 (CN)
(74) Representative: Isarpatent
(86) International application number: PCT/CN2022/119363
(87) International publication number: WO 2023/041047

(57) **Abstract**

Embodiments of this application disclose a file service providing method based on a cloud technology and a related device, to improve a speed of accessing data in an off-cloud network storage device by an on-cloud instance. The method specifically includes: A cloud management platform provides a file system service configuration interface, where the file system service configuration interface is configured to obtain a network address of an off-cloud network storage device and a file directory of the off-cloud network storage device. The cloud management platform creates a file system and provides a mount address of the file system, where the file system is remotely connected to the off-cloud network storage device. The file system receives a first data read request sent, for target data in the file directory, by an on-cloud instance that is mounted with the file system based on the mount address, and forwards the first data read request to the off-cloud network storage device. The file system receives the target data sent by the off-cloud network storage device in response to the first data read request, sends the target data to the on-cloud instance, and stores the target data.

## Description

This application claims priority to Chinese Patent Application No. 202111095547.0, filed with the China National Intellectual Property Administration on September 17, 2021 and entitled "FILE SERVICE PROVIDING METHOD BASED ON CLOUD TECHNOLOGY AND RELATED DEVICE", which is incorporated herein by reference in its entirety.

### TECHNICAL FIELD

Embodiments of this application relate to the field of cloud technologies, and in particular, to a file service providing method based on a cloud technology and a related device.

### BACKGROUND

Advent of a cloud computing era accelerates digital transformation of enterprises, so that migrating enterprise services to the cloud gradually becomes a trend. Currently, services of most enterprises are deployed offline, and almost all data of these enterprises is stored in an offline off-cloud network storage device.

If an on-cloud instance, such as a virtual machine, needs to access data stored in the off-cloud network storage device, the on-cloud instance usually needs to depend on direct connect (direct connect, DC). An offline storage network can be connected, through the direct connect, to a network used by the on-cloud instance. A data input/output (input/output, I/O) request sent by the on-cloud instance may be transferred to the off-cloud network storage device through the direct connect. In this way, the on-cloud instance can directly access the offline off-cloud network storage device.

However, a bandwidth capability of the direct connect is limited, and an access delay increases because the direct connect is affected by geographical factors. As a result, the on-cloud instance slowly accesses the data in the off-cloud network storage device. This is not conducive to expansion of an on-cloud service, and performance of the direct connect becomes a bottleneck. Therefore, there is still difficulty in migrating the enterprise services to the cloud.

### SUMMARY

Embodiments of this application provide a file service providing method based on a cloud technology, to improve a speed of accessing data in an off-cloud network storage device by an on-cloud instance. Embodiments of this application further provide a corresponding file service system based on a cloud technology, a computer device, a computer storage medium, and a computer program product including instructions.

A first aspect of this application provides a file service providing method based on a cloud technology. The method includes: A cloud management platform provides a file system service configuration interface, where the file system service configuration interface is configured to obtain a network address of an off-cloud network storage device and a file directory of the off-cloud network storage device. The cloud management platform creates a file system and provides a mount address of the file system, where the file system is remotely connected to the off-cloud network storage device. The file system receives a first data read request sent, for target data in the file directory, by an on-cloud instance that is mounted with the file system based on the mount address, and forwards the first data read request to the off-cloud network storage device. The file system receives the target data sent by the off-cloud network storage device in response to the first data read request, sends the target data to the on-cloud instance, and stores the target data.

According to the first aspect, the cloud management platform creates the file system remotely connected to the off-cloud network storage device, and the file system is mounted to the on-cloud instance, so that a cache service is provided for the on-cloud instance to access the off-cloud network storage device. After the on-cloud instance is mounted with the file system, the file system stores accessed target data. If a data read request for the target data is subsequently received again, the target data can be directly returned to the on-cloud instance. This greatly improves a speed of accessing data in the off-cloud network storage device by the on-cloud instance, and reduces access pressure to the off-cloud network storage device. In addition, after logging in to the on-cloud instance, a tenant can control the on-cloud instance to mount the file system, to use the service. A use process is simple, and the tenant does not need to perform complex configuration. This can improve user experience.

In a possible implementation of the first aspect, the method further includes: The file system receives a second data read request sent by the on-cloud instance for the target data in the file directory. The file system determines that the file system stores the target data, and sends the target data to the on-cloud instance.

In this possible implementation, the target data is stored in the file system used as the cache service, and the file system can directly return the target data to the on-cloud instance. This greatly improves the speed of accessing data in the off-cloud network storage device by the on-cloud instance.

In a possible implementation of the first aspect, the target data is file metadata. After the step in which the file system sends the target data to the on-cloud instance, the method further includes: The file system receives file data that is sent by the off-cloud network storage device and that corresponds to the file metadata.

In this possible implementation, the target data is the file metadata, and the file system can obtain the file metadata when accessing the off-cloud network storage device. Therefore, the file system can also quickly return the target data to the on-cloud instance, and when the file system is idle, store the file data corresponding to the file metadata for subsequent use. This greatly improves the speed of accessing data in the off-cloud network storage device by the on-cloud instance.

In a possible implementation of the first aspect, the method further includes: The file system performs timing after sending the target data to the on-cloud instance. The file system deletes the target data from the file system if the file system does not receive a data read request for the target data in the file directory after a timing value exceeds a first threshold.

In this possible implementation, the file system deletes the target data if the file system does not receive a data read request for a file after the timing value exceeds the first threshold. In other words, the file system can delete data that is in the file system and that is not accessed for a long time, to maintain a storage capacity of the file system. This improves user experience.

In a possible implementation of the first aspect, the method further includes: The file system sorts timing values in descending order after a capacity of the file system exceeds a second threshold. The file system deletes, from the file system, target data whose timing value ranks top.

In this possible implementation, when the storage capacity of the file system is insufficient, the file system can delete data that is not accessed for a longest time, to release the storage capacity of the file system and ensure that recently accessed target data is still stored. This improves user experience.

In a possible implementation of the first aspect, the method further includes: The file system receives a data write request sent by the on-cloud instance for the target data in the file directory. The file system modifies, based on the data write request, the target data stored in the file system.

In this possible implementation, the on-cloud instance can modify the target data in the file system. This improves user experience.

In a possible implementation of the first aspect, the file system service configuration interface is further configured to obtain read/write permission for the file directory of the off-cloud network storage device. The read/write permission is read-and-write or read-only.

In this possible implementation, a user can customize the read/write permission for data in the off-cloud network storage device through the file system service configuration interface. This improves user experience. When the read/write permission is read-only, the on-cloud instance allows only data in a file system on the cloud to be modified. This improves security of accessing the off-cloud network storage device.

In a possible implementation of the first aspect, when the read/write permission is read-and-write, the method further includes: The file system forwards the data write request to the off-cloud network storage device, to modify the target data in the off-cloud network storage device.

In this possible implementation, when the read/write permission is allowed, the on-cloud instance can modify the target data in the off-cloud network storage device. This improves feasibility of solutions.

In a possible implementation of the first aspect, an elastic volume service is disposed in the file system. The step in which the file system stores the target data includes: The file system stores the target data in the elastic volume service.

In this possible implementation, the file system stores the target data in the elastic volume service. The elastic volume service may be built in or externally connected. This improves scalability of the file system.

In a possible implementation of the first aspect, the off-cloud network storage device includes a network attached storage NAS device and an object storage service OBS device that are locally deployed by a tenant.

In this possible implementation, the off-cloud network storage device may be the NAS device or the OBS device that is locally deployed by the tenant. This improves feasibility of solutions.

In a possible implementation of the first aspect, the on-cloud instance is one of a virtual machine, a container, and a bare metal server in a data center that provides a cloud service. The off-cloud network storage device is disposed outside the data center.

In this possible implementation, the on-cloud instance may be the virtual machine, the container, or the bare metal server in the data center that provides the cloud service. The off-cloud network storage device is disposed outside the data center. This improves feasibility of solutions.

A second aspect of this application provides a file service system based on a cloud technology. The system includes: a cloud management platform, configured to provide a file system service configuration interface, where the file system service configuration interface is configured to obtain a network address of an off-cloud network storage device and a file directory of the off-cloud network storage device; and the cloud management platform is further configured to: create a file system and provide a mount address of the file system, where the file system is remotely connected to the off-cloud network storage device; and an on-cloud instance, configured to be mounted with the file system based on the mount address. The file system is configured to: receive a first data read request sent by the on-cloud instance for target data in the file directory, and forward the first data read request to the off-cloud network storage device. The file system is further configured to: receive the target data sent by the off-cloud network storage device in response to the first data read request, send the target data to the on-cloud instance, and store the target data.

According to the second aspect, the file system remotely connected to the off-cloud network storage device is disposed in the file service system based on a cloud technology, and the file system is mounted to the on-cloud instance, so that a cache service is provided for the on-cloud instance to access the off-cloud network storage device. This greatly improves a speed of accessing data in the off-cloud network storage device by the on-cloud instance, and reduces access pressure to the off-cloud network storage device.

According to the second aspect, the cloud management platform provides the file system service configuration interface, so that the cloud management platform can obtain the network address and the file directory of the off-cloud network storage device, and creates the file system remotely connected to the off-cloud network storage device. The file system can receive the first data read request sent, for the target data in the file directory, by the on-cloud instance that is mounted with the file system, and forward the first data read request to the off-cloud network storage device. In this way, the file system can receive the target data sent by the off-cloud network storage device in response to the first data read request, send the target data to the on-cloud instance, and store the target data. In this way, the file system is mounted to the on-cloud instance to provide a cache service for accessing the off-cloud network storage device. After the on-cloud instance is mounted with the file system, the file system stores accessed target data. If a data read request for the target data is subsequently received again, the target data can be directly returned to the on-cloud instance. This greatly improves a speed of accessing data in the off-cloud network storage device by the on-cloud instance. In addition, after logging in to the on-cloud instance, a tenant can control the on-cloud instance to mount the file system, to use the service. A use process is simple, and the tenant does not need to perform complex configuration. This can improve user experience.

In a possible implementation of the second aspect, the file system is further configured to receive a second data read request sent by the on-cloud instance for the target data in the file directory. The file system is further configured to: determine that the file system stores the target data, and send the target data to the on-cloud instance.

In this possible implementation, the target data is stored in the file system used as the cache service, and the file system can directly return the target data to the on-cloud instance. This greatly improves the speed of accessing data in the off-cloud network storage device by the on-cloud instance.

In a possible implementation of the second aspect, the target data is file metadata. The file system is further configured to receive file data that is sent by the off-cloud network storage device and that corresponds to the file metadata.

In this possible implementation, the target data is the file metadata, and the file system can obtain the file metadata when accessing the off-cloud network storage device. Therefore, the file system can also quickly return the target data to the on-cloud instance, and when the file system is idle, store the file data corresponding to the file metadata for subsequent use. This greatly improves the speed of accessing data in the off-cloud network storage device by the on-cloud instance.

In a possible implementation of the second aspect, the file system is further configured to perform timing after sending the target data to the on-cloud instance. The file system is further configured to delete the target data from the file system if the file system does not receive a data read request for the target data in the file directory after a timing value exceeds a first threshold.

In this possible implementation, the file system deletes the target data if the file system does not receive a data read request for a file after the timing value exceeds the first threshold. In other words, the file system can delete data that is in the file system and that is not accessed for a long time, to maintain a storage capacity of the file system. This improves user experience.

In a possible implementation of the second aspect, the file system is further configured to sort timing values in descending order after a capacity of the file system exceeds a second threshold. The file system is further configured to delete, from the file system, target data whose timing value ranks top.

In this possible implementation, when the storage capacity of the file system is insufficient, the file system can delete data that is not accessed for a longest time, to release the storage capacity of the file system and ensure that recently accessed target data is still stored. This improves user experience.

In a possible implementation of the second aspect, the file system is further configured to receive a data write request sent by the on-cloud instance for the target data in the file directory. The file system is further configured to modify, based on the data write request, the target data stored in the file system.

In this possible implementation, the on-cloud instance can modify the target data in the file system. This improves user experience.

In a possible implementation of the second aspect, the file system service configuration interface is further configured to obtain read/write permission for the file directory of the off-cloud network storage device. The read/write permission is read-and-write or read-only.

In this possible implementation, a user can customize the read/write permission for data in the off-cloud network storage device through the file system service configuration interface. This improves user experience. When the read/write permission is read-only, the on-cloud instance allows only data in a file system on the cloud to be modified. This improves security of accessing the off-cloud network storage device.

In a possible implementation of the second aspect, when the read/write permission is read-and-write, the file system is further configured to forward the data write request to the off-cloud network storage device, to modify the target data in the off-cloud network storage device.

In this possible implementation, the on-cloud instance can modify the target data in the off-cloud network storage device. This improves feasibility of solutions.

In a possible implementation of the second aspect, an elastic volume service is disposed in the file system. The file system is specifically configured to store the target data in the elastic volume service.

In this possible implementation, the file system stores the target data in the elastic volume service. The elastic volume service may be built in or externally connected. This improves scalability of the file system.

In a possible implementation of the second aspect, the off-cloud network storage device includes a network attached storage NAS device and an object storage service OBS device that are locally deployed by a tenant.

In this possible implementation, the off-cloud network storage device may be the NAS device or the OBS device that is locally deployed by the tenant. This improves feasibility of solutions.

In a possible implementation of the second aspect, the on-cloud instance is one of a virtual machine, a container, and a bare metal server in a data center that provides a cloud service. The off-cloud network storage device is disposed outside the data center.

In this possible implementation, the on-cloud instance may be the virtual machine, the container, or the bare metal server in the data center that provides the cloud service. The off-cloud network storage device is disposed outside the data center. This improves feasibility of solutions.

A third aspect of this application provides a computer device. The computer device includes a processor and a memory. The memory is configured to store computer-executable instructions. The processor is configured to execute the computer-executable instructions stored in the memory, to enable the computer device to implement the method disclosed in any one of the first aspect or the possible implementations of the first aspect.

A fourth aspect of this application provides a computer storage medium, including computer-readable instructions. When the computer-readable instructions are executed, the method disclosed in any one of the first aspect or the possible implementations of the first aspect is implemented.

A fifth aspect of this application provides a computer program product including instructions. When the computer program product runs on a computer, the computer is enabled to perform the method disclosed in any one of the first aspect or the possible implementations of the first aspect.

In embodiments of this application, the cloud management platform provides the file system service configuration interface, so that the cloud management platform can obtain the network address and the file directory of the off-cloud network storage device, and creates the file system remotely connected to the off-cloud network storage device. The file system can receive the first data read request sent, for the target data in the file directory, by the on-cloud instance that is mounted with the file system, and forward the first data read request to the off-cloud network storage device. In this way, the file system can receive the target data sent by the off-cloud network storage device in response to the first data read request, send the target data to the on-cloud instance, and store the target data. In this way, the file system is mounted to the on-cloud instance to provide a cache service for accessing the off-cloud network storage device. After the on-cloud instance is mounted with the file system, the file system stores accessed target data. If a data read request for the target data is subsequently received again, the target data can be directly returned to the on-cloud instance. This greatly improves a speed of accessing data in the off-cloud network storage device by the on-cloud instance, and reduces access pressure to the off-cloud network storage device. In addition, after logging in to the on-cloud instance, a tenant can control the on-cloud instance to mount the file system, to use the service. A use process is simple, and the tenant does not need to perform complex configuration. This can improve user experience.

### BRIEF DESCRIPTION OF DRAWINGS

FIG. 1 is a diagram of an architecture of an on-cloud data center according to an embodiment of this application;
FIG. 2 is a schematic diagram of an embodiment of a file service providing method based on a cloud technology according to an embodiment of this application;
FIG. 3 is a schematic diagram of an application architecture of a file service providing method based on a cloud technology according to an embodiment of this application;
FIG. 4 is a schematic diagram of a software architecture of a cloud management platform according to an embodiment of this application;
FIG. 5 is a schematic diagram of another embodiment of a file service providing method based on a cloud technology according to an embodiment of this application;
FIG. 6 is a schematic diagram of another software architecture of a cloud management platform according to an embodiment of this application;
FIG. 7 is a schematic diagram of a software architecture of a file system according to an embodiment of this application;
FIG. 8 is a schematic diagram of another embodiment of a file service providing method based on a cloud technology according to an embodiment of this application;
FIG. 9 is a schematic diagram of another embodiment of a file service providing method based on a cloud technology according to an embodiment of this application;
FIG. 10 is a schematic diagram of another embodiment of a file service providing method based on a cloud technology according to an embodiment of this application;
FIG. 11 is a schematic diagram of another embodiment of a file service providing method based on a cloud technology according to an embodiment of this application;
FIG. 12 is a schematic diagram of a hardware architecture of a cloud management platform according to an embodiment of this application;
FIG. 13 is a schematic diagram of a hardware architecture of a file system according to an embodiment of this application; and
FIG. 14 is a schematic diagram of an embodiment of a computer device according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. Moreover, the terms "include", "contain", and any variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device.

Embodiments of this application provide a file service providing method based on a cloud technology, to improve a speed of accessing data in an off-cloud network storage device by an on-cloud instance. Embodiments of this application further provide a corresponding file service system based on a cloud technology, a computer device, a computer storage medium, and a computer program product including instructions. The following separately provides descriptions.

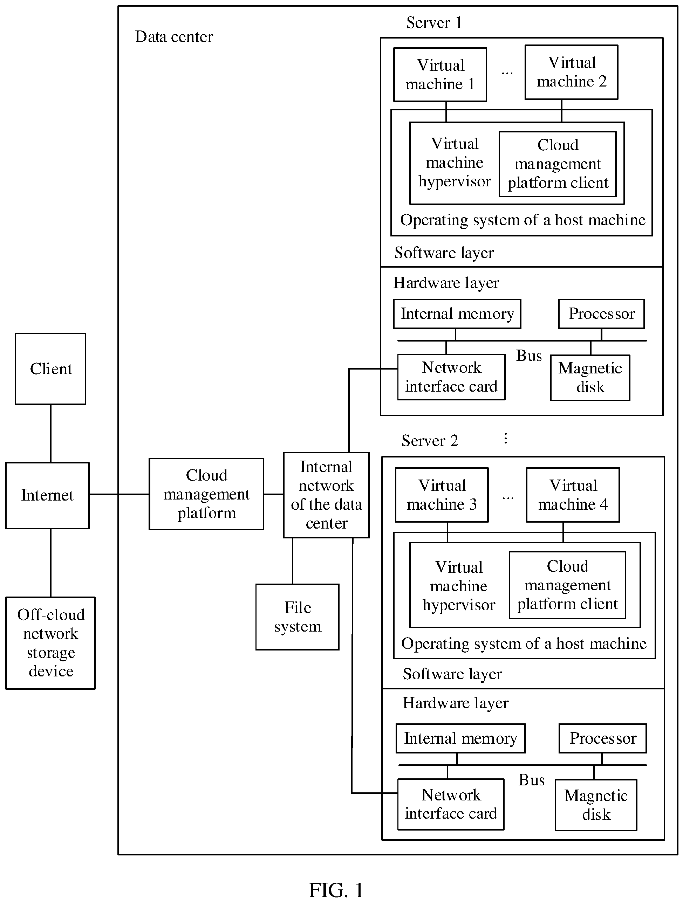

Refer to FIG. 1. A data center is specifically an on-cloud data center, including a cloud management platform, an internal network of the data center, and a plurality of servers. Each server is the same, for example, a server 1 and a server 2. The server 1 and the server 2 exchange information with the internal network of the data center and the cloud management platform by using network interface cards of the server 1 and the server 2. Information about the cloud management platform is sent to a cloud management platform client in a virtual machine hypervisor (Hypervisor). The virtual machine hypervisor is also referred to as a virtual machine monitor (virtual machine monitor, VMM). The cloud management platform exchanges information with the client through an Internet. Each server further includes a host machine and one or more virtual machines (virtual machine, VM) running on the host machine, for example, a virtual machine 1 and a virtual machine 2. The virtual machine may also be referred to as an on-cloud instance. The on-cloud instance may access an off-cloud network storage device through the Internet. The off-cloud network storage device may include a plurality of storage devices deployed by a tenant. The cloud management platform may further create a file system. The file system may be mounted to the on-cloud instance.

It should be noted that the on-cloud instance may further include a container and a bare metal server. The container may be directly run on the host machine, or run on the virtual machine of the host machine.

The cloud management platform may provide a page related to a public cloud service for the tenant to remotely access the public cloud service. The tenant may log in to the cloud management platform on a public cloud access page by using a pre-registered account and password, and after successful login, select and purchase a corresponding public cloud service on the public cloud access page, such as an object storage service (object-based storage, OBS), a virtual machine service, a container service, and a bare metal server service.

A network address may also be referred to as an internet protocol address (internet protocol address, IP address). After obtaining an IP address between devices, the devices may perform a communication operation such as data access based on the IP address.

Direct connect (direct connect, DC) is used to establish a high-speed, low-latency, stable, and secure dedicated connection channel between a local data center of a user and an on-cloud network, such as a virtual private cloud (virtual private cloud, VPC). The on-cloud network can be interconnected with an offline network through the direct connect.

NAS (network attached storage) is a device that is connected to a network and has a data storage function. NAS connects a storage device and an existing network to provide data and file services.

A cache (cache) is a high-speed data storage layer configured to store local data and usually configured to store temporary data to accelerate access to a back-end storage system.

Hot data is data that is repeatedly used during service processing.

The following describes, with reference to the architecture of the on-cloud data center and related concepts of the cloud service, the file service providing method based on a cloud technology provided in embodiments of this application.

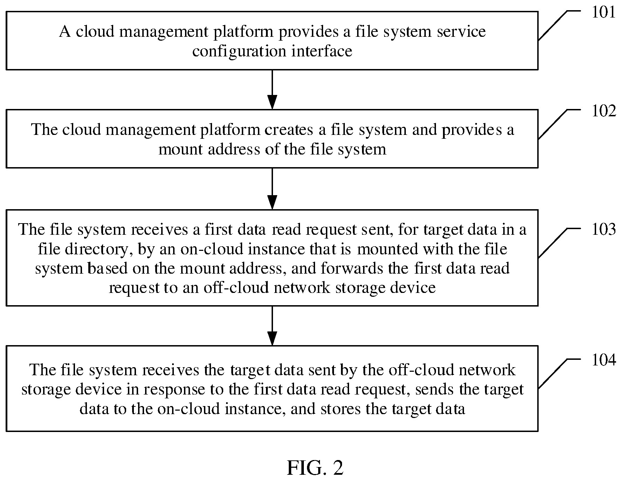

Refer to FIG. 2. In an embodiment of a file service providing method based on a cloud technology according to an embodiment of this application, the method includes the following steps.

101: A cloud management platform provides a file system service configuration interface.

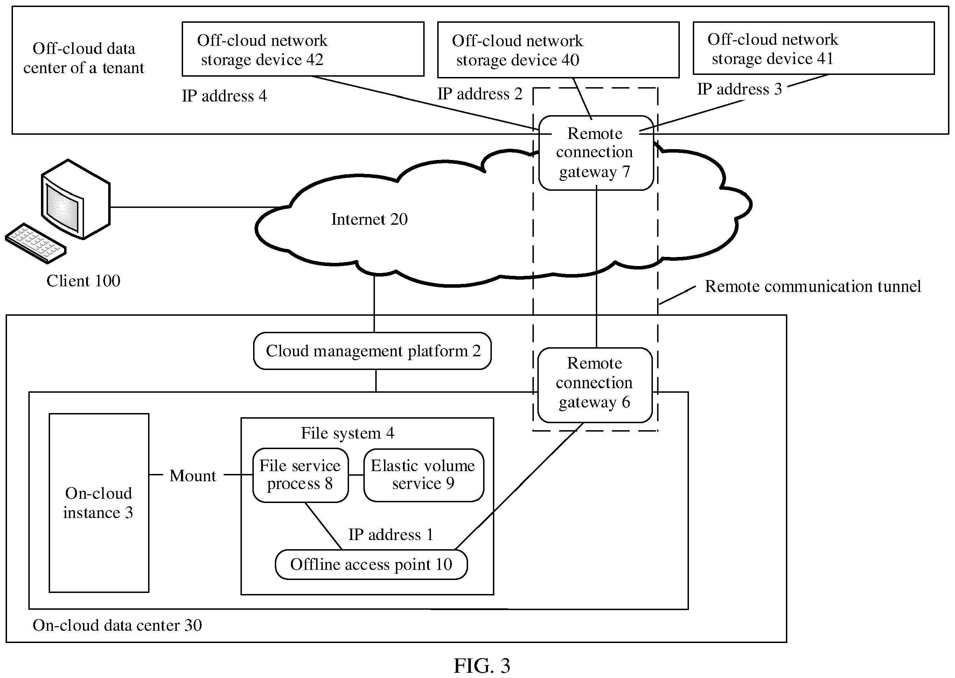

Refer to FIG. 3. In an on-cloud data center 30, a cloud management platform 2 communicates with a client 100 through an Internet 20. A tenant purchases an on-cloud instance 3, for example, a virtual machine, and expects the on-cloud instance 3 to access an off-cloud network storage device 40 of the tenant. In this case, the tenant may log in to the cloud management platform 2, and request to create a file system 4 as the on-cloud instance 3 to access a cache service of the off-cloud network storage device 40. The off-cloud network storage device 40 is disposed outside the on-cloud data center 30, that is, in an off-cloud data center of the tenant.

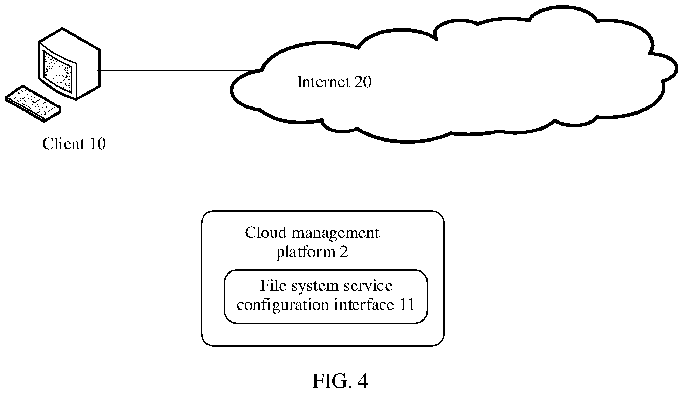

Refer to FIG. 4. In this case, the cloud management platform 2 may provide a file system service configuration interface 11. The file system service configuration interface 11 may be an application programming interface (application programming interface, API), a page, or another interface, for example, may be specifically displayed as a configuration interface. A user may input, on the file system service configuration interface 11 through the client 100, information required for creating the file system 4. The file system service configuration interface 11 may obtain a network address of the off-cloud network storage device 40, for example, an IP address 2, and obtain a file directory of the off-cloud network storage device 40.

102: The cloud management platform creates the file system and provides a mount address of the file system.

Further, after obtaining the network address and the file directory of the off-cloud network storage device 40 through the file system service configuration interface, the cloud management platform 2 may create the file system 4 based on the network address and the file directory. The file system 4 includes a file service process 8, an elastic volume service 9 (elastic volume service, EVS), and an offline access point 10. Because the file system service configuration interface obtains the network address IP address 2 of the off-cloud network storage device 40, the cloud management platform 2 accesses the IP address 2 of the off-cloud network storage device 40 when creating the file system 4, so that the file system 4 is remotely connected to the off-cloud network storage device 40. Specifically, the offline access point 10 is connected to a remote connection gateway 6, and the remote connection gateway 6 is connected to a remote connection gateway 7 of the off-cloud network storage device 40 through a remote communication tunnel, namely, direct connect. In this way, the file system 4 is remotely connected to the off-cloud data center of the tenant. In other words, the direct connect is implemented. When subsequently accessing the off-cloud network storage device 40, the file system 4 accesses the IP address 2 by using an IP address 1 of the offline access point 10, to be remotely connected to the off-cloud network storage device 40.

In addition, after creating the file system 4, the cloud management platform 2 further provides the mount address of the file system 4 for the on-cloud instance 3 to be mounted with the file system 4. Specifically, the file service process 8 is mounted to the on-cloud instance 3.

103: The file system receives a first data read request sent, for target data in the file directory, by the on-cloud instance that is mounted with the file system based on the mount address, and forwards the first data read request to the off-cloud network storage device.

After the on-cloud instance 3 is mounted with the file system 4 based on the mount address, the on-cloud data center 30 can work normally. The file system service configuration interface may display the file directory of the off-cloud network storage device 40 in the client 100 for the tenant to view. The tenant may select the target data, in the file directory, required by the on-cloud instance 3, and send the first data read request to the cloud management platform 2 through the client 100. A cloud management platform client in the on-cloud instance 3 may receive the first data read request and send the first data read request to the file system 4. Because the file system 4 is just created, and the elastic volume service 9 in the file system 4 does not store any data, the file system 4 forwards the first data read request to the off-cloud network storage device 40. In addition, the first data read request may alternatively be directly initiated by the on-cloud instance 3. In other words, the on-cloud instance 3 directly searches for whether there is the target data in the file directory, and initiates the first data read request to the file system when the target data is required.

104: The file system receives the target data sent by the off-cloud network storage device in response to the first data read request, sends the target data to the on-cloud instance, and stores the target data.

After receiving the first data read request, the off-cloud network storage device 40 makes a response, obtains the target data, and returns the target data to the file system 4. After receiving the target data, the file system 4 continues to return the target data to the on-cloud instance 3, and also stores the target data for use when the target data is accessed next time. The target data is specifically stored in the elastic volume service 9.

It should be noted that all modules in this embodiment of this application may correspond to those shown in FIG. 1. For example, the file system 4 may be disposed in an operating system of the host machine in FIG. 1, may be disposed in the virtual machine hypervisor, or may be disposed in parallel with the virtual machine 1 and the virtual machine 2, provided that the file system 4 can communicate with the cloud management platform 2 through the internal network of the data center and can access the Internet. This is not limited in this embodiment of this application. The on-cloud instance 3 may correspond to the virtual machine 1, or may correspond to the virtual machine 2. The elastic volume service 9 corresponds to a magnetic disk at a hardware layer. The magnetic disk herein may be a magnetic disk of each server, but is not limited to a magnetic disk of a local server. The remote connection gateway 6 corresponds to a network interface card at the hardware layer. The off-cloud network storage device 40 corresponds to the off-cloud network storage device in FIG. 2, provided that the off-cloud network storage device can access the Internet.

In addition, this embodiment of this application is described by using one on-cloud instance 3 and one off-cloud network storage device 40 as an example. However, there may be a plurality of on-cloud instances 3, and there may also be a plurality of off-cloud network storage devices 40. For example, the off-cloud data center of the tenant further includes an off-cloud network storage device 41 and an off-cloud network storage device 42. A specific implementation of the off-cloud network storage device 41 and a specific implementation of the off-cloud network storage device 42 are the same. Details are not described in this embodiment of this application. Specifically, each on-cloud instance 3 is mounted with the file system 4. The file system 4 may select different remote connection gateways 6 to access different off-cloud network storage devices 40. Specifically, different off-cloud network storage devices 40 access the file system 4 on the cloud in a manner of mount points, that is, register a routing directory. In the routing directory, different mount points may be determined to forward a data read request to different off-cloud network storage devices 40. For example, an IP address 3 is selected as a mount point to access the off-cloud network storage device 41, and an IP address 4 is selected as a mount point to access the off-cloud network storage device 42.

In this embodiment of this application, the cloud management platform provides the file system service configuration interface, so that the cloud management platform can obtain the network address and the file directory of the off-cloud network storage device, and creates the file system remotely connected to the off-cloud network storage device. The file system can receive the first data read request sent, for the target data in the file directory, by the on-cloud instance that is mounted with the file system, and forward the first data read request to the off-cloud network storage device. In this way, the file system can receive the target data sent by the off-cloud network storage device in response to the first data read request, send the target data to the on-cloud instance, and store the target data. In this way, the file system is mounted to the on-cloud instance to provide a cache service for accessing the off-cloud network storage device. After the on-cloud instance is mounted with the file system, the file system stores accessed target data. If a data read request for the target data is subsequently received again, the target data can be directly returned to the on-cloud instance. This greatly improves a speed of accessing data in the off-cloud network storage device by the on-cloud instance, and reduces access pressure to the off-cloud network storage device. In addition, after logging in to the on-cloud instance, a tenant can control the on-cloud instance to mount the file system, to use the service. A use process is simple, and the tenant does not need to perform complex configuration. This can improve user experience.

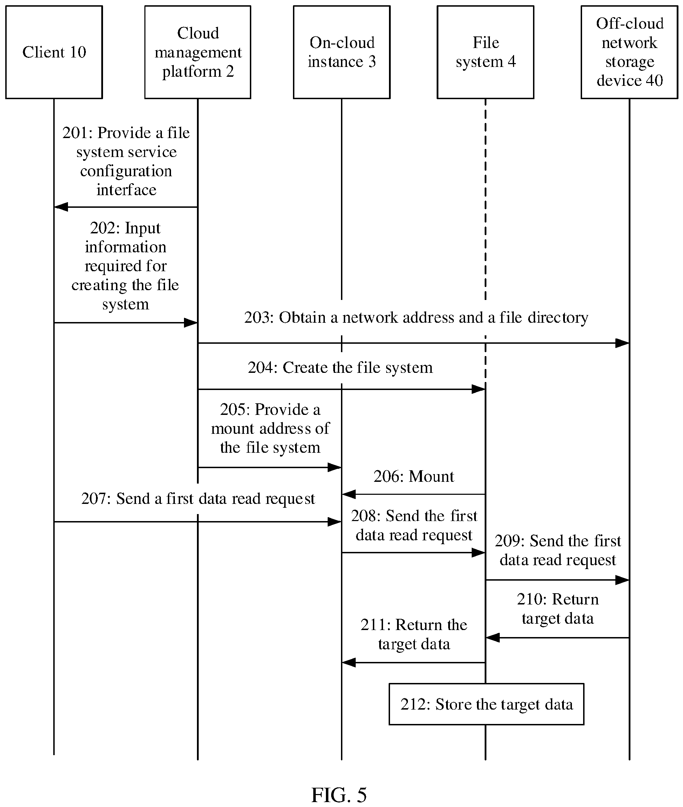

To more clearly describe the file service providing method based on a cloud technology provided in embodiments of this application, refer to FIG. 5. The method specifically includes the following steps.

201: A cloud management platform provides a file system service configuration interface.

The file system 4 may be specifically a network file system (network file system, NFS).

202: A client inputs information required for creating the file system.

203: The cloud management platform obtains a network address and a file directory.

204: The cloud management platform creates the file system.

205: The cloud management platform provides a mount address of the file system.

206: The file system is mounted.

Step 201 to step 206 are a configuration process of the file system.

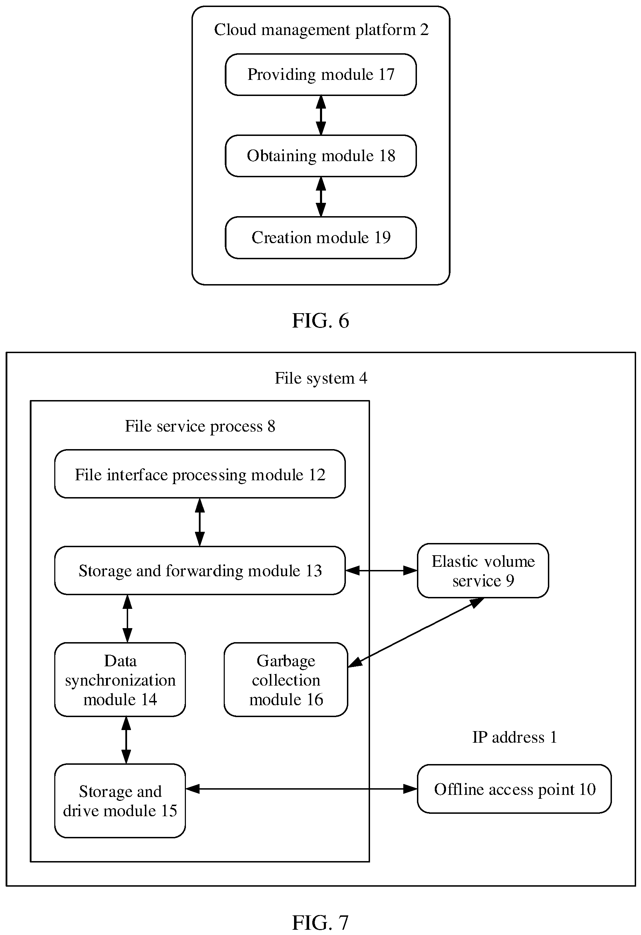

Refer to FIG. 6. The cloud management platform 2 includes a providing module 17, an obtaining module 18, and a creation module 19. The providing module 17 is configured to provide the file system service configuration interface. The client may input the information required for creating the file system through the file system service configuration interface. The obtaining module 18 obtains the network address and the file directory of the off-cloud network storage device 40 based on these pieces of information. The creation module 19 may create the file system 4 based on the data, and provide the mount address of the file system 4 through the providing module 17, so that the file system 4 can be mounted to the on-cloud instance 3 based on the mount address.

Refer to FIG. 7. The file service process 8 of the file system 4 in this embodiment of this application specifically includes a file interface processing module 12, a storage and forwarding module 13, a data synchronization module 14, a storage and drive module 15, and a garbage collection module 16. Specifically, the file interface processing module 12 is responsible for communication between the on-cloud instance 3 and the file service process 8. The file interface processing module 12 uses an NFS v3 interface protocol. The storage and forwarding module 13 is responsible for processing a request of the on-cloud instance 3. The data synchronization module 14 is responsible for synchronizing data in the off-cloud network storage device 40. The storage and drive module 15 is responsible for exchanging data with the off-cloud network storage device 40. The garbage collection module 16 is responsible for automatically releasing storage space of the elastic volume service 9.

207: The client sends a first data read request.

Step 207 may not be performed, and step 208 is directly performed.

208: The on-cloud instance sends the first data read request.

The on-cloud instance 3 is specifically a data center that provides a cloud service, namely, one of a virtual machine, a container (container), and a bare metal server (bare metal server, BMS) in the on-cloud data center 30.

An application is run on the on-cloud instance 3. The application may send the first data read request to the file system 4 through an NFS client. The file interface processing module 12 in the file system 4 receives the first data read request. The storage and forwarding module 13 processes the first data read request, and identifies whether target data of the first data read request is stored in the elastic volume service 9 or stored in the off-cloud network storage device 40.

The target data includes file metadata and file data. The file metadata includes fields size and sync_size, which respectively indicate a size of the target data in the elastic volume service 9 and a size of the target data in the off-cloud network storage device 40. The storage and forwarding module 13 accesses the off-cloud network storage device 40. When size is smaller than sync_size, it indicates that the target data is in an unsynchronized state, and the target data is stored in the off-cloud network storage device 40. When size is the same as sync_size, it indicates that the target data does not need to be synchronized, and the target data is stored in the elastic volume service 9.

209: The file system sends the first data read request.

210: The off-cloud network storage device returns the target data.

211: The file system returns the target data.

212: The file system stores the target data.

The off-cloud network storage device 40 includes a network attached storage (network attached storage, NAS) device and an OBS device that are locally deployed by a tenant. In other words, the off-cloud network storage device 40 may be an offline NAS device or an offline OBS device.

When the off-cloud network storage device 40 is the offline NAS device, the off-cloud network storage device 40 may be considered as an offline NAS service, the file system 4 may be considered as an on-cloud NAS service, and the on-cloud instance 3 may be considered as an on-cloud client. When the off-cloud network storage device 40 is the offline OBS device, an OBS interconnection module may be disposed on the cloud. The OBS interconnection module may provide a unified interface of the file system 4 for the offline OBS device.

When the target data of the first data read request is stored in the off-cloud network storage device 40, that is, the file system 4 sends the first data read request to the off-cloud network storage device 40, all routing directories registered by the off-cloud network storage device 40 are in a directory of /mnt of the on-cloud instance 3 mounted with the file service process 8. When the data synchronization module 14 sends the first data read request for the target data /nas1/dir/file1, the storage and drive module 15 converts the path into a request for /mnt/nasl/dir/filel. The file system 4 may find, through the path, target data that needs to be read in the off-cloud network storage device 40. The off-cloud network storage device 40 returns the target data to the file system 4. The file system 4 continues to return the target data to the on-cloud instance 3, and stores the target data in the elastic volume service 9.

Step 207 to step 212 are an application process of the file system. For specific implementations of the steps in FIG. 5, refer to implementations of the steps in FIG. 2. Details are not described again in embodiments of this application.

After the file system is created, the file system may have a plurality of applications, which are separately described as follows.

### I. Quickly return the target data

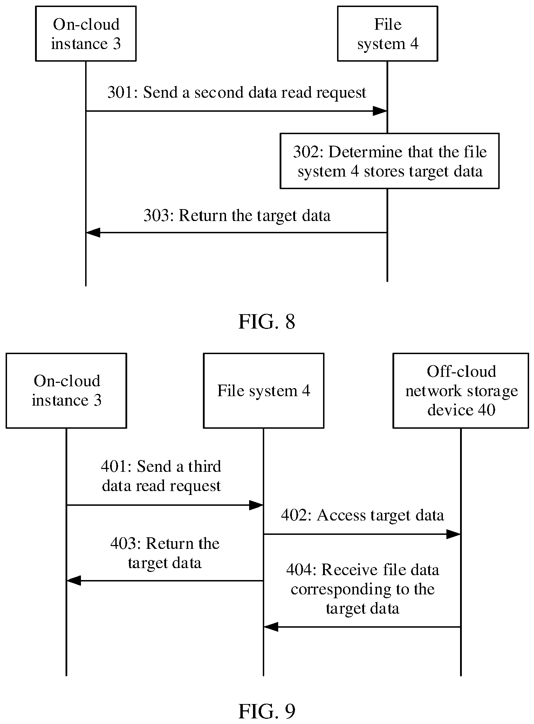

Refer to FIG. 8. The method further includes the following steps.

301: The on-cloud instance sends a second data read request.

302: The file system determines that the file system stores the target data.

303: The file system returns the target data.

After the on-cloud instance 3 sends the second data read request, the storage and forwarding module 13 identifies that the target data of the second data read request is stored in the elastic volume service 9. In other words, the file system 4 determines that the file system 4 stores the target data, so that the file system 4 can directly and quickly return the target data to the on-cloud instance 3.

In another case, the target data is file metadata. Refer to FIG. 9. The method further includes the following steps.

401: The on-cloud instance sends a third data read request.

402: The file system accesses the target data.

After the on-cloud instance 3 sends the third data read request, the file system 4 accesses the target data. In other words, the storage and forwarding module 13 accesses the off-cloud network storage device 40 to determine whether the target data needs to be synchronized. In this case, the data synchronization module 14 obtains the file metadata of the target data. The file metadata includes a name, an attribute, and the like of file data.

403: The file system returns the target data.

404: The file system receives the file data corresponding to the target data.

In this case, the target data is the file metadata. The file system 4 can directly return the file metadata to the on-cloud instance 3. After the on-cloud instance 3 obtains the required file metadata, when the file system 4 is idle, the file system 4 obtains, from the off-cloud network storage device 40, the file data corresponding to the file metadata, and stores the file data in the elastic volume service 9 for next use.

### II. Delete garbage data

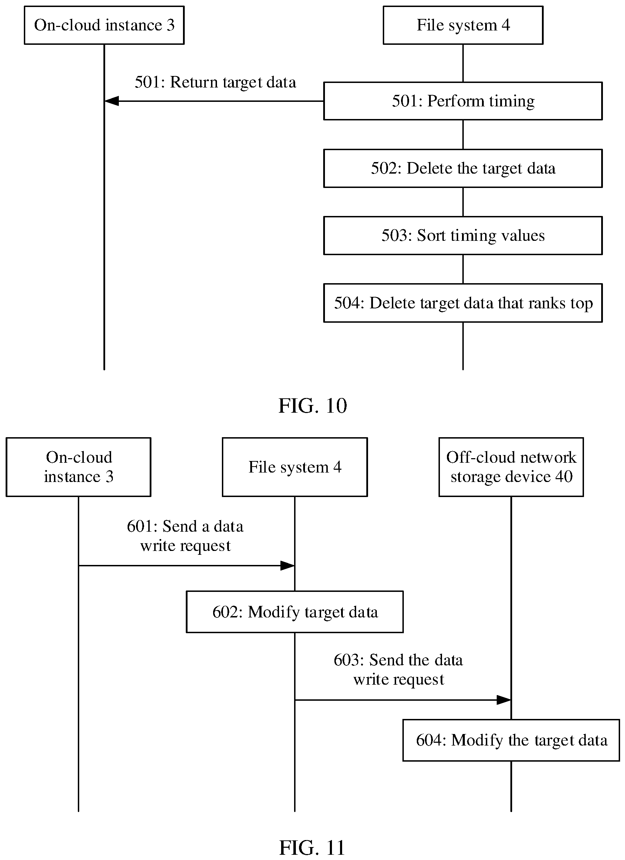

Refer to FIG. 10. The method further includes the following steps.

501: The file system returns the target data and performs timing.

After returning the target data to the on-cloud instance 3, the file system 4 further starts performing timing. Specifically, the file metadata records, in a value of atime, a time at which the target data is accessed last time.

502: The file system deletes the target data.

The garbage collection module 16 compares a value of atime of the target data with curr_time (current time). If a value obtained by subtracting atime from curr_time is greater than a first threshold Time_Threshold, it indicates that the target data is not accessed for a long time. The file system 4 does not receive, for a long time, a fourth data read request for requesting the target data, may release the target data, and delete the target data from the elastic volume service 9, so that the garbage data can be deleted to release a storage capacity and store hot data.

503: The file system sorts timing values.

504: The file system deletes target data that ranks top.

In addition, after the capacity of the file system exceeds a second threshold Capacity_Threshold, the garbage collection module 16 sorts timing values recorded in step 501 in descending order. A larger timing value indicates a longer time for which the target data is requested by the on-cloud instance 3 last time. Target data whose timing value ranks top is deleted from the elastic volume service 9.

It should be noted that step 502, step 503, and step 504 may be performed separately. This is not limited in embodiments of this application.

### III. Change the target data

Refer to FIG. 11. The method further includes the following steps.

601: The on-cloud instance sends a data write request.

602: The file system modifies the target data.

The application of the on-cloud instance 3 sends the data write request to the file system 4. After the file interface processing module 12 in the file system 4 receives the data write request sent by the on-cloud instance 3 for the target data in the file directory, the file system 4 can modify the target data.

603: The file system sends the data write request.

604: The off-cloud network storage device modifies the target data.

The file system service configuration interface may further obtain read/write permission for the file directory of the off-cloud network storage device 40. In other words, the read/write permission for the file directory of the off-cloud network storage device 40 is customized by a user in the file system service configuration interface. The read/write permission includes read-and-write (read and write, rw) and read-only (read only, ro).

When the read/write permission is read-and-write, the file system 4 further forwards the data write request to the off-cloud network storage device 40, and the off-cloud network storage device 40 modifies the target data based on the data write request.

In embodiments of this application, a plurality of modules are disposed in the file system, so that after the file system is created and mounted to the on-cloud instance, a plurality of applications can be performed, to meet various requirements of the user. This improves user experience.

Refer to FIG. 3. In an embodiment of a file service system based on a cloud technology provided in embodiments of this application, the system includes:
a cloud management platform 2, configured to provide a file system service configuration interface, where the file system service configuration interface is configured to obtain a network address of an off-cloud network storage device and a file directory of the off-cloud network storage device, and the cloud management platform 2 may perform step 101 in the foregoing method embodiment; and
the cloud management platform 2 is further configured to: create a file system 4 and provide a mount address of the file system 4, where the file system 4 is remotely connected to the off-cloud network storage device, and the cloud management platform 2 may perform step 102 in the foregoing method embodiment; and
an on-cloud instance 3, configured to be mounted with the file system 4 based on the mount address.

The file system 4 is configured to: receive a first data read request sent by the on-cloud instance 3 for target data in the file directory, and forward the first data read request to the off-cloud network storage device. The file system 4 may perform step 103 in the foregoing method embodiment.

The file system 4 is further configured to: receive the target data sent by the off-cloud network storage device in response to the first data read request, send the target data to the on-cloud instance, and store the target data. The file system 4 may perform step 104 in the foregoing method embodiment.

In this embodiment of this application, the cloud management platform 2 provides the file system service configuration interface, so that the cloud management platform 2 can obtain the network address and the file directory of the off-cloud network storage device, and creates the file system 4 remotely connected to the off-cloud network storage device. The file system 4 can receive the first data read request sent, for the target data in the file directory, by the on-cloud instance 3 that is mounted with the file system 4, and forward the first data read request to the off-cloud network storage device. In this way, the file system 4 can receive the target data sent by the off-cloud network storage device in response to the first data read request, send the target data to the on-cloud instance 3, and store the target data. In this way, the file system is mounted to the on-cloud instance to provide a cache service for accessing the off-cloud network storage device. After the on-cloud instance is mounted with the file system, the file system stores accessed target data. If a data read request for the target data is subsequently received again, the target data can be directly returned to the on-cloud instance. This greatly improves a speed of accessing data in the off-cloud network storage device by the on-cloud instance, and reduces access pressure to the off-cloud network storage device. In addition, after logging in to the on-cloud instance, a tenant can control the on-cloud instance to mount the file system, to use the service. A use process is simple, and the tenant does not need to perform complex configuration. This can improve user experience.

Optionally, the file system 4 is further configured to receive a second data read request sent by the on-cloud instance 3 for the target data in the file directory. The file system 4 is further configured to: determine that the file system 4 stores the target data, and send the target data to the on-cloud instance 3.

Optionally, the target data is file metadata. The file system 4 is further configured to receive file data that is sent by the off-cloud network storage device and that corresponds to the file metadata.

Optionally, the file system 4 is further configured to perform timing after sending the target data to the on-cloud instance 3. The file system 4 is further configured to delete the target data from the file system if the file system does not receive a data read request for the target data in the file directory after a timing value exceeds a threshold.

Optionally, the file system 4 is further configured to sort timing values in descending order after a capacity of the file system exceeds a second threshold. The file system 4 is further configured to delete, from the file system, target data whose timing value ranks top.

Optionally, the file system 4 is further configured to receive a data write request sent by the on-cloud instance 3 for the target data in the file directory. The file system 4 is further configured to modify, based on the data write request, the target data stored in the file system.

Optionally, the file system service configuration interface is further configured to obtain read/write permission for the file directory of the off-cloud network storage device. The read/write permission is read-and-write or read-only.

Optionally, when the read/write permission is read-and-write, the file system 4 is further configured to forward the data write request to the off-cloud network storage device, to modify the target data in the off-cloud network storage device.

Optionally, an elastic volume service is disposed in the file system. The file system 4 is specifically configured to store the target data in the elastic volume service.

Optionally, the off-cloud network storage device is a network attached storage NAS device and an object storage service OBS that are locally deployed by a tenant.

Optionally, the on-cloud instance 3 is one of a virtual machine, a container, and a bare metal server in a data center that provides a cloud service. The off-cloud network storage device is disposed outside the data center.

For connection relationships and implementations of various modules included in the file service system based on a cloud technology provided in this embodiment of this application, refer to the foregoing corresponding method embodiments. Details are not described herein again in this embodiment of this application.

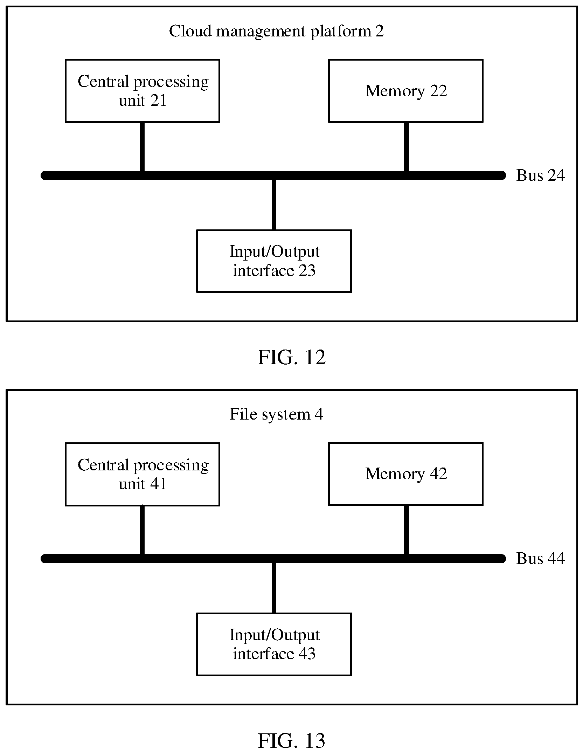

Refer to FIG. 12. For the hardware layer, the cloud management platform 2 may include a central processing unit 21, a memory 22, and an input/output interface 23. The central processing unit 21, the memory 22, and the input/output interface 23 are connected through a bus 24. The central processing unit 21 may obtain instructions stored in the memory 22 to perform operations such as providing a file system service configuration interface and creating a file system, and complete an operation of communicating with the Internet 20 through the input/output interface 23. In this way, steps performed by the cloud management platform 2 in the file service providing method based on a cloud technology are implemented.

Refer to FIG. 13. For the hardware layer, the file system 4 may include a central processing unit 41, a memory 42, and an input/output interface 43. The central processing unit 41, the memory 42, and the input/output interface 43 are connected through a bus 44. The central processing unit 41 may obtain instructions stored in the memory 42 to perform an operation performed by the file service process 8. The memory 42 may correspond to the elastic volume service 9. However, it should be noted that the elastic volume service 9 may alternatively be an externally accessed storage device. An operation in which the offline access point 10 or the file interface processing module 12 communicates with the outside may be completed through the input/output interface 23. In this way, steps performed by the file system 4 in the file service providing method based on a cloud technology are implemented.

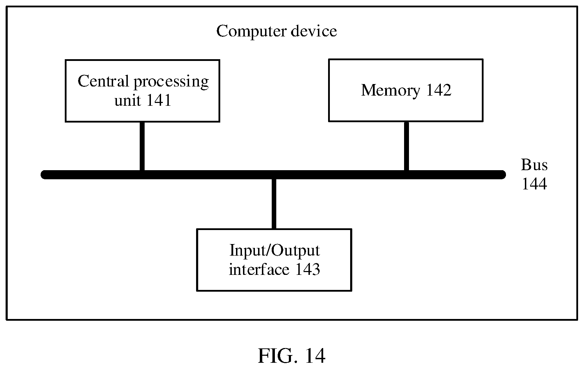

Further, FIG. 14 is a schematic diagram of an apparatus structure of a computer device according to an embodiment of the present invention. As shown in FIG. 14, the computer device includes a processor 141, a memory 142, a communication interface 143, and a bus 144. The processor 141, the memory 142, and the communication interface 143 are separately connected to the bus 144. The memory 142 is configured to store computer-executable instructions. The processor 141 is configured to execute the computer-executable instructions stored in the memory 142, to enable the computer device to implement the file system service providing method based on a cloud technology.

In addition, an embodiment of the present invention further provides a computer storage medium, including computer-readable instructions. When the computer-readable instructions are executed, the file service providing method based on a cloud technology is implemented.

An embodiment of the present invention further provides a computer program product including instructions. When the computer program product runs on a computer, the computer is enabled to perform the file service providing method based on a cloud technology.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division, and there may be another division manner during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A file service providing method based on a cloud technology, wherein the method comprises:
providing, by a cloud management platform, a file system service configuration interface, wherein the file system service configuration interface is configured to obtain a network address of an off-cloud network storage device and a file directory of the off-cloud network storage device;
creating, by the cloud management platform, a file system and providing a mount address of the file system, wherein the file system is remotely connected to the off-cloud network storage device;
receiving, by the file system, a first data read request sent, for target data in the file directory, by an on-cloud instance that is mounted with the file system based on the mount address, and forwarding the first data read request to the off-cloud network storage device; and
receiving, by the file system, the target data sent by the off-cloud network storage device in response to the first data read request, sending the target data to the on-cloud instance, and storing the target data.

2. The method according to claim 1, wherein the method further comprises:
receiving, by the file system, a second data read request sent by the on-cloud instance for the target data in the file directory; and
determining, by the file system, that the file system stores the target data, and sending the target data to the on-cloud instance.

3. The method according to claim 1, wherein the target data is file metadata, and after the sending, by the file system, the target data to the on-cloud instance, the method further comprises:
receiving, by the file system, file data that is sent by the off-cloud network storage device and that corresponds to the file metadata.

4. The method according to any one of claims 1 to 3, wherein the method further comprises:
performing, by the file system, timing after sending the target data to the on-cloud instance; and
deleting, by the file system, the target data from the file system if the file system does not receive a data read request for the target data in the file directory after a timing value exceeds a first threshold.

5. The method according to claim 4, wherein the method further comprises:
sorting, by the file system, timing values in descending order after a capacity of the file system exceeds a second threshold; and
deleting, by the file system from the file system, target data whose timing value ranks top.

6. The method according to any one of claims 1 to 5, wherein the method further comprises:
receiving, by the file system, a data write request sent by the on-cloud instance for the target data in the file directory; and
modifying, by the file system based on the data write request, the target data stored in the file system.

7. The method according to claim 6, wherein the file system service configuration interface is further configured to obtain read/write permission for the file directory of the off-cloud network storage device, wherein the read/write permission is read-and-write or read-only.

8. The method according to claim 7, wherein when the read/write permission is read-and-write, the method further comprises:
forwarding, by the file system, the data write request to the off-cloud network storage device, to modify the target data in the off-cloud network storage device.

9. The method according to any one of claims 1 to 8, wherein an elastic volume service is disposed in the file system, and the storing, by the file system, the target data comprises:
storing, by the file system, the target data in the elastic volume service.

10. The method according to any one of claims 1 to 9, wherein the off-cloud network storage device comprises a network attached storage NAS device and an object storage service OBS device that are locally deployed by a tenant.

11. The method according to any one of claims 1 to 10, wherein the on-cloud instance is one of a virtual machine, a container, and a bare metal server in a data center that provides a cloud service, and the off-cloud network storage device is disposed outside the data center.

12. A file service system based on a cloud technology, wherein the system comprises:
a cloud management platform, configured to provide a file system service configuration interface, wherein the file system service configuration interface is configured to obtain a network address of an off-cloud network storage device and a file directory of the off-cloud network storage device; and
the cloud management platform is further configured to: create a file system and provide a mount address of the file system, wherein the file system is remotely connected to the off-cloud network storage device; and
an on-cloud instance, configured to be mounted with the file system based on the mount address, wherein
the file system is configured to: receive a first data read request sent by the on-cloud instance for target data in the file directory, and forward the first data read request to the off-cloud network storage device; and
the file system is further configured to: receive the target data sent by the off-cloud network storage device in response to the first data read request, send the target data to the on-cloud instance, and store the target data.

13. The system according to claim 12, wherein
the file system is further configured to receive a second data read request sent by the on-cloud instance for the target data in the file directory; and
the file system is further configured to: determine that the file system stores the target data, and send the target data to the on-cloud instance.

14. The system according to claim 12, wherein the target data is file metadata; and
the file system is further configured to receive file data that is sent by the off-cloud network storage device and that corresponds to the file metadata.

15. The system according to any one of claims 12 to 14, wherein
the file system is further configured to perform timing after sending the target data to the on-cloud instance; and
the file system is further configured to delete the target data from the file system if the file system does not receive a data read request for the target data in the file directory after a timing value exceeds a first threshold.

16. The system according to claim 15, wherein the method further comprises:
the file system is further configured to sort timing values in descending order after a capacity of the file system exceeds a second threshold; and
the file system is further configured to delete, from the file system, target data whose timing value ranks top.

17. The system according to any one of claims 12 to 16, wherein
the file system is further configured to receive a data write request sent by the on-cloud instance for the target data in the file directory; and
the file system is further configured to modify, based on the data write request, the target data stored in the file system.

18. The system according to claim 17, wherein
the file system service configuration interface is further configured to obtain read/write permission for the file directory of the off-cloud network storage device, wherein the read/write permission is read-and-write or read-only.

19. The system according to claim 18, wherein when the read/write permission is read-and-write,
the file system is further configured to forward the data write request to the off-cloud network storage device, to modify the target data in the off-cloud network storage device.

20. The system according to any one of claims 12 to 19, wherein an elastic volume service is disposed in the file system, and
the file system is specifically configured to store the target data in the elastic volume service.

21. The system according to any one of claims 12 to 20, wherein the off-cloud network storage device comprises a network attached storage NAS device and an object storage service OBS device that are locally deployed by a tenant.

22. The system according to any one of claims 12 to 21, wherein the on-cloud instance is one of a virtual machine, a container, and a bare metal server in a data center that provides a cloud service, and the off-cloud network storage device is disposed outside the data center.

23. A computer device, wherein the computer device comprises a processor and a memory;
the memory is configured to store computer-executable instructions; and
the processor is configured to execute the computer-executable instructions stored in the memory, to enable the computer device to implement the method according to any one of claims 1 to 11.

24. A computer storage medium, comprising computer-readable instructions, wherein when the computer-readable instructions are executed, the method according to any one of claims 1 to 11 is implemented.

25. A computer program product comprising instructions, wherein when the computer program product runs on a computer, the computer is enabled to perform the method according to any one of claims 1 to 11.
